# EUROPEAN PATENT APPLICATION

(11) **EP 2 062 957 A1**
(43) Date of publication of application: **27.05.2009**
(21) Application number: 08169474.7
(22) Date of filing: 20.11.2008
(51) Int. Cl.: C09K 8/12, C08G 59/50

(54) **Swelling inhibitors for clays and shales**

(30) Priority: 21.11.2007 IT VA20070085
(71) Applicant: Lamberti Spa, 21041 Albizzate (IT)
(72) Inventor: Federici Franco, 21052, Busto Arsizio (VA) (IT); Bossi, Thierry, 21030, Orino (VA) (IT); Merli, Luigi, 21047, Saronno (VA) (IT); Li Bassi, Giuseppe, 21026, Gavirate (VA) (IT); Franchini, Jacopo, 20020, Arese (MI) (IT)

(57) **Abstract**

Method for inhibiting the hydration of clays and shales during drilling operations, which includes the use of a water based drilling fluid that contains as clay and shale inhibitor from 0.2 to 5 % by weight of the reaction products of an epoxy resin with at least one primary or secondary aliphatic or cycloaliphatic amine.

## Description

### Technical Field

The present invention concerns hydration inhibitors for clays and shales, i.e. chemicals that inhibit the swelling of clays and shales which come into contact with the water base fluids used in the oil industry during drilling and construction of oil and gas wells.

The clay and shale inhibitors of the present invention are the reaction products of epoxy resins with at least one primary or secondary aliphatic or cycloaliphatic amine.

During the rotary drilling of wells, a drilling fluid is circulated through the well, from the underground to the surface, to suspend the drill cuttings originating from the drilling process and to transport the cutting to the surface.

At the same time the drilling fluid cools and cleans the drill bit, reduces the friction between the drill pipe and the borehole walls and stabilizes the sections of the well that are not reinforced.

Normally the drilling fluids form a filter cake of low permeability which prevents leaking into the surrounding geological formations and avoids excessive losses of the liquid phase of the drilling fluid itself.

Drilling fluids can be classified according to the nature of their continuous liquid phase. There are oil based drilling fluids, in which the solids are suspended in a continuos oleaginous phase and optionally water or a brine phase is emulsified into the oleaginous phase. Alternatively, water base drilling fluids contain solids suspended in water or brine or solutions of silicates.

Various chemicals can be added, deliberately or not, to water base drilling fluids:

A) organic colloids or clays, used to impart viscosity and fluid loss reduction;

B) insoluble inorganic minerals to increase the fluid density;

C) solids that originate from the drilling process.

The solids, which disperse into the fluid, include cuttings from the drilling operation and from the unstable geological surrounding formations.

When the formation gives up solids, which are swellable clayey materials, they can compromise drilling time and increase costs.

There are different kinds of clays and shales that swell and they all can cause a number of problems.

The swelling increases the friction between the drill pipe and the borehole walls, causes drilling fluid losses and sticking between the drill pipe and the borehole walls.

For this reason the development of swelling inhibitors for clays and shales is important for the oil and gas industry.

The present invention works in this direction to solve these problems.

### Background Art

Many clays and shales inhibitors are known in the art, among which inorganic salts such as potassium chloride, which inhibits the swelling of clays and shales, are well known to those skilled in the art.

Many patents have been filed, which describe techniques or products that can be used to inhibit the swelling of clays and shales. Without having the ambition to exhaustively summarize the available patent literature and only by way of example, we cite the following swelling inhibiting compositions:

a) inorganic phosphates, described in US 4,605,068 (Young et al.);

b) polyalkoxy diamines and their salts, in US 6,484,821,

US 6,609,578, US 6,247,543 and US 20030106718, all by Patel et al.;

c) choline derivatives, as in US 5,908,814 (Patel et al.);

d) oligomethylene diamines and their salts, in US 5,771,971 (Horton et al.), and US 20020155956 (Chamberlain et al.);

e) the addition product of carboxymethyl cellulose and an organic amine, in WO 2006/013595 (Li Bassi et al.)

f) 1,2-cyclohexanediamine and/or their salts, in WO 2006/013597 (Merli et al.);

g) salts of phosphoric acid esters of oxyalkylated polyols, in WO 2006/013596 (McGregor et al.);

h) the combination of a partially hydrolized acrylic copolymer, potassium chloride and polyanionic cellulose, in US 4,664,818 (Halliday William S. et al.);

i) quaternary ammonium compounds, in US 5,197,544 (Himes Ronald E.);

l) polymers based on dialkyl aminoalkyl methacrylate, in US 7,091,159 (Eoff, Larry S. et al.);

m) aqueous solutions containing a polymer with hydrophilic and hydrophobic groups, in US 5,728,653 (Audibert, Annie et al.);

n) the reaction product of a polyhydroxyalkane and an alkylene oxide, in US 6,544,933 (Reid, Paul Ian et al.).

### Disclosure of Invention

It has now been found that the reaction products of epoxy resins with certain amines are excellent clay and shale inhibitors for the oil industry, being capable of effectively inhibiting the swelling of clays and shales in subterranean formations.

It is therefore a fundamental object of the present invention a method for inhibiting the hydration of clays and shales during drilling operations, which includes the use of a water base drilling fluid that contains as clay and shale inhibitor from 0.2 to 5 % by weight of the reaction products of an epoxy resin with at least one primary or secondary aliphatic or cycloaliphatic amine.

It is another object of the present invention to provide a water base drilling fluid which comprises from 0.2 to 5 %, preferably from 2 to 4% by weight, of the reaction products of an epoxy resin with at least one primary or secondary aliphatic or cycloaliphatic amine.

It is still another object of the present invention a method for preparation of a clay and shale inhibitors for water base drilling fluids by reacting epoxy resins with at least one primary or secondary aliphatic or cycloaliphatic amines

The epoxy resins useful for the realization of the present invention have on the average more than one epoxy group per molecule, preferably two epoxy groups per molecule; they may be aromatic, aliphatic or cycloaliphatic, monomeric, oligomeric or polymeric and have molecular weights from 100 to 2,000, preferably from 200 to 1,000.

Suitable epoxy resins are those prepared by the reaction of epichlorohydrin with compounds having hydroxyl groups, such as phenolic compounds and aliphatic polyols; among the useful phenolic compounds we cite Bisphenol A, resorcinol, bis(p-hydroxyphenyl)methane, 4-4'-dihydroxy biphenyl, the preferred phenolic compound being Bisphenol A; among the useful aliphatic polyols we cite polyethylene glycol, polypropylene glycol, 1,4-butanediol, the preferred aliphatic polyol being polypropylene glycol having molecular weight from 200 to 800.

In a typical embodiment of the present invention the epoxy resin is the reaction product of epichlorohydrin and Bisphenol A with molecular weight of about 380, commercially available under the trade name DER 331 from Dow Chemical Company.

The primary or secondary amines useful for the realization of the present invention are alkanolamines or diamines of formula (I) R"'R"N-R'-XH, where: X is O or NR⁰ and R⁰ is hydrogen or a linear or branched alkyl group having from 1 to 6 carbon atoms; R' is a linear or branched, aliphatic or cycloaliphatic alkylene group having from 2 to 10 carbon atoms; R" and R''' can be equal or different from one another and are hydrogen or a linear or branched alkyl group having from 1 to 6 carbon atoms, optionally substituted with a hydroxyl group; suitable aliphatic amines are also polyalkylene polyamines of formula (II) H-(NH-R)ₙ-YH, wherein Y is O or NH, R is a linear or branched alkylene having from 2 to 3, preferably 2, carbon atoms and n is a number from 1 to 6, preferably from 2 to 4.

The reaction products of epoxy resins with primary or secondary aliphatic or cycloaliphatic amines according to the present invention are hydroxy- substituted compounds and can advantageously be prepared as solutions without a purification step; they can be added to the drilling fluids in neutral form or as salt of organic or inorganic acids.

The clay and shale inhibitors of the present invention can be prepared by heating one or more primary or secondary aliphatic or cycloaliphatic amine, in particular at least one alkanolamine or diamine of formula (I) or polyalkylene polyamine of formula (II) and adding the epoxy resin into it, under stirring without any solvent, at a temperature ranging from 50 to 180° C. When the reaction is completed, water and an acid, such as acetic acid or other organic or inorganic acid, can be added to prepare a ready to use aqueous solution of the inhibitor.

The pH of the solution is normally adjusted to values of about 6-8; the concentration of clays and shales inhibitor in the solution advantageously varies between 30 and 70% by weight.

Alternatively, when the condensation reaction is completed, it is possible to dilute the product with an organic solvent, by way of example with ethylene glycol, propylene glycol, tripropyleneglycol monomethyl ether or diethylene glycol, adjusting the concentration of the condensation product between 20 and 90% by weight.

Various alkanolamines and diamines of formula (I) and polyalkyleneamines of formula (II) are commercially available, and are for example diethanolamine, methylethanolamine, aminoethylethanolamine, ethylendiamine,

hexamethylenediamine, diethylenetriamine, triethylenetetramine, tetraethylenepentamine, hydroxyethyldiethylenetriamine.

Mixtures of alkanolamines and diamines of formula (I) and of polyalkyleneamines of formula (II) can also be used for the realization of the invention and are commercially available, for example from Akzo Nobel under the trade name Berolamine 20.

The preferred amines are triethylenetetramine, tetraethylenepentaamine and Berolamine 20.

To obtain the shale and clay inhibitor of the present invention, the molar ratio between the epoxy resin having an average of two epoxy groups per molecule and the alkanolamine, diamine or polyalkylene polyamine is about 1:2; higher molar ratios can be used, up to about 1:1.

The water base drilling fluid of the invention, in addition to the clay and shale inhibitor, also comprises the chemicals customarily used and well known to those skilled in the art, such as weighing agents, fluid loss reducers, corrosion inhibitors, defoamers and viscosifiers.

The continuous water phase can be selected among: fresh water, seawater, brines, solutions of soluble organic compounds in water and their mixtures.

Useful weighing agents can be selected among barite, hematite iron oxide, calcium carbonate, magnesium carbonate, organic and inorganic magnesium salts, calcium chloride, calcium bromide, magnesium chloride, magnesium bromide, halides of zinc, and their mixtures.

The following examples illustrate the preparation of about 50% by weight solutions of clay and shale inhibitors according to the invention; performance tests have been carried out to demonstrate their excellent properties as clay and shale inhibitors.

EXAMPLE 1

In a 1 liter reaction vessel equipped with stirrer, thermometer and dropping funnel 221.0 g (2.1 moles) of diethanolamine are charged, heat is applied to reach 80° C and 380.0 g of an epoxy resin obtained from Bisphenol A and epichlorohydrin (DGEBA) having molecular weight of about 380 are added dropwise in two hours; the mixture is stirred at the same temperature for about half an hour and subsequently 150 g (2 moles) of 80% acetic acid and 451 g of water are added.

EXAMPLE 2

In a 1 liter reaction vessel equipped with stirrer, thermometer and dropping funnel 221.0 g (2.1 moles) of diethanolamine are charged, heat is applied to reach 80° C and 380.0 g (1.0 mole) of polypropylene glycol diglycidyl ether having molecular weight of about 380 are added dropwise in two hours; the mixture is stirred at the same temperature for about half an hour and subsequently 150 g (2 moles) of 80% acetic acid and 451 g of water are added.

EXAMPLE 3

In a 1 liter reaction vessel equipped with stirrer, thermometer and dropping funnel 110.5 g (1.05 moles) of diethanolamine are charged, heat is applied to reach 80° C and 320.0 g (0.5 moles) of polypropylene glycol diglycidyl ether having molecular weight of about 640 are added dropwise in two hours; the mixture is stirred at the same temperature for about half an hour and subsequently 75 g (1 mole) of 80% acetic acid and 355.5 g of water are added.

EXAMPLE 4

In a 1 liter reaction vessel equipped with stirrer, thermometer and dropping funnel 206 g (2 moles) of diethylenetriamine (DETA) are charged, heat is applied to reach 80° C and 380.0 g (1 mole) of DGEBA are added dropwise in 3 hours; the mixture is stirred at the same temperature for about half an hour and subsequently 586 g of tripropyleneglycol monomethyl ether are added.

EXAMPLE 5

In a 1 liter reaction vessel equipped with stirrer, thermometer and dropping funnel 200 g (1.38 moles) of triethylenetetramine (TETA) are charged, heat is applied to reach 80° C and 262.0 g (0.69 moles) of DGEBA are added dropwise in 3 hours; the mixture is stirred at the same temperature for about half an hour and subsequently 208 g (2.77 moles) of 80% acetic acid and 400 g of water are added.

EXAMPLE 6

In a 1 liter reaction vessel equipped with stirrer, thermometer and dropping funnel 206.0 g (2 moles) of DETA are charged, heat is applied to reach 80° C and 380.0 g (1 mole) of DGEBA are added dropwise in 3 hours; the mixture is stirred at the same temperature for about half an hour and subsequently 225 g (3 moles) of 80% acetic acid and 450 g of water are added.

EXAMPLE 7

In a 1 liter reaction vessel equipped with stirrer, thermometer and dropping funnel 200 g (1.38 moles) of TETA are charged, heat is applied to reach 80° C and 262.0 g (0.69 mole) of DGEBA are added dropwise in 3 hours; the mixture is stirred at the same temperature for about half an hour and subsequently 462 g of tripropyleneglycol monomethyl ether are added.

EXAMPLE 8

In a 1 liter reaction vessel equipped with stirrer, thermometer and dropping funnel 208.2 g (2 moles) of aminoethylethanolamine are charged, heat is applied to reach 80° C and 380.0 g (1 mole) of polypropylene glycol diglycidyl ether having molecular weight of about 380 are added dropwise in 3 hours; the mixture is stirred at the same temperature for about half an hour and subsequently 112.5 g (1 mole) of 80% acetic acid and 475 g of water are added.

EXAMPLE 9

In a 1 liter reaction vessel equipped with stirrer, thermometer and dropping funnel 206.2 g (2 moles) of DETA are charged, heat is applied to reach 80° C and 380.0 g (1 mole) of polypropylene glycol diglycidyl ether having molecular weight of about 380 are added dropwise in 3 hours; the mixture is stirred at the same temperature for about half an hour and subsequently 112.5 g (1.5 mole) of 80% acetic acid and 437 g of water are added.

EXAMPLE 10

In a 1 liter reaction vessel equipped with stirrer, thermometer and dropping funnel 146.1 g (1.0 mole) of TETA are charged, heat is applied to reach 80° C and 190.0 g (0.5 moles) of polypropylene glycol diglycidyl ether having molecular weight of about 380 are added dropwise in three hours; the mixture is stirred at the same temperature for about half an hour and subsequentely 56.3 g (0.75 mole) of 80% acetic acid and 280 g of water are added.

EXAMPLE 11

In a 1 liter reaction vessel equipped with stirrer, thermometer and dropping funnel 104.1 g (1.0 mole) of aminoethylethanolamine are charged, heat is applied to reach 80° C and 320.0 g (0.5 moles) of polypropylene glycol diglycidyl ether having molecular weight of about 640 are added dropwise in 3 hours; the mixture is stirred at the same temperature for about half an hour and subsequently 56.3 g (0.75 moles) of 80% acetic acid and 368 g of water are added.

EXAMPLE 12

In a 1 liter reaction vessel equipped with stirrer, thermometer and dropping funnel 103 g (1.0 mole) of DETA are charged, heat is applied to reach 80° C and 320.0 g (0.5 moles) of polypropylene glycol diglycidyl ether having molecular weight of about 640 are added dropwise in 3 hours; the mixture is stirred at the same temperature for about half an hour and subsequently 56.3 g (0.75 moles) of 80% acetic acid and 367 g of water are added.

EXAMPLE 13

In a 1 liter reaction vessel equipped with stirrer, thermometer and dropping funnel 146.1 g (1.0 mole) of TETA are charged, heat is applied to reach 80° C and 320.0 g (0.5 moles) of polypropylene glycol diglycidyl ether having molecular weight of about 640 are added dropwise in two hours; the mixture is stirred at the same temperature for about half an hour and subsequently 56.3 g (0.75 mole) of 80% acetic acid and 410 g of water are added.

EXAMPLE 14

In a 1 liter reaction vessel equipped with stirrer, thermometer and dropping funnel 190 g (1.0 mole) of tetraethylenepentamine (TEPA) are charged, heat is applied to reach 80° C and 190.0 g (0.5 moles) of polypropylene glycol diglycidyl ether having molecular weight of about 380 are added dropwise in 3 hours; the mixture is stirred at the same temperature for about half an hour and subsequently 150 g (2 moles) of 80% acetic acid and 230 g of water are added.

EXAMPLE 15

In a 1 liter reaction vessel equipped with stirrer, thermometer and dropping funnel 190 g of TEPA are charged, heat is applied to reach 80° C and 190 g (0.5 moles) of DGEBA previously dissolved in 85 g of tripropyleneglycol monomethyl ether are added dropwise in 3 hours; the mixture is stirred at the same temperature for about half an hour and subsequentely 150 g (2 moles) of 80% acetic acid and 135 g of water are added.

EXAMPLE 16

In a 1 liter reaction vessel equipped with stirrer, thermometer and dropping funnel 200 g of Berolamine 20 (from Akzo Nobel) are charged, heat is applied to reach 80° C and 190 g (0.5 moles) of DGEBA are added dropwise in 3 hours; the mixture is stirred at the same temperature for about half an hour and subsequently 150 g (2 moles) of 80% acetic acid and 240 g of water are added.

PERFORMANCE TESTING

Performance tests have been carried out to determine the ability of the clays and shales inhibitors of the present invention to inhibit the swelling of a bentonite in a water base fluid.

Method 1.

The following method has been used, where ppb means "pounds per barrel":

350 ml tap water and 8 g (8 ppb) of clays and shales inhibitor (calculated on 100% active substance) are charged into a clean glass beaker.

10 g of bentonite according to API Spec 13A/ISO 13500:2006 (10 ppb) are added and the mixture (the mud) is mixed with a Hamilton Beach Mixer for 30 minutes.

Additional 10 grams of bentonite are added and the mud is mixed for additional 30 minutes; the procedure is repeated until a total of 40 ppb of bentonite have been added. The rheology of the mud is measured by means of a rotational viscometer Fann mod. 35 at 25°C. The mud is then aged in special cells, which are kept rolling in a special heated rolling oven at 65°C for 16 hours, and the rheology is again measured after the aging.

The additions of 10 g of bentonite and the heat aging are repated until the mud becomes too viscous to be measured.

The performance tests have been carried out as described here above on the clay and shale inhibitors of the present invention as prepared in the Examples 1,2,3,5,6, on diethanolamine (DEA) and on triethanolamine (TEA); the rheological data (Yield Point) are reported in Table 1, where the first column reports the ppb of bentonite added before the measurement, "AHR" means "after hot rolling".

**Table 1**

| | Ex. 1 | Ex. 2 | Ex.3 | Ex. 5 | Ex.6 | DEA | TEA |
|---|---|---|---|---|---|---|---|
| 40 | 62 | 7 | 68 | 23 | 37 | 330 | 90 |
| 40 Ahr | 10 | 1 | 7 | 0 | 4 | | 195 |
| 50 | 113 | 27 | 58 | 11 | 16 | | 330 |
| 60 | 330 | 156 | 180 | 33 | 43 | | |
| 60 Ahr | | 99 | 59 | 24 | 39 | | |
| 70 | | 330 | 330 | 135 | 330 | | |
| 70 Ahr | | | | 70 | | | |
| 80 | | | | 330 | | | |
| 80 Ahr | | | | | | | |
| 90 | | | | | | | |
| 90 Ahr | | | | | | | |

Method 2.

350 ml tap water and 8 g (8 ppb) of clay and shale inhibitor (calculated on 100% active substance) are charged into a clean Hamilton Beach cup. The pH value is adjusted to 9. The sample is mixed with a Hamilton Beach Mixer for 15 minutes.

100 g of sieved Oxford clay are added and the mixture is then aged in special cells, which are kept rolling in a special heated rolling oven at 66°C for 16 hours.

After ageing every sample is filtered on a 2 mm sieve and clay is washed with mother water.

The recovered clay is extruded and the torque applied to the machine's arm needed to make a complete turn is measured.

The resistance against the extrusion, and hence the torque, is directly dependent to the inhibitor efficiency. The results are reported in Table 2.

The higher the value the better the performance of the inhibitor.

**Table 2**

| Turns | Samples (N*m) | | | | | | | | |
|---|---|---|---|---|---|---|---|---|---|
| | Ex. 8 | Ex. 9 | Ex. 10 | Ex. 11 | Ex. 12 | Ex. 13 | Ex. 14 | Ex. 15 | Ex. 16 |
| 5 | 0 | 0 | 0 | 0 | 0 | 0 | 0 | 0 | 0 |
| 6 | 0 | 0 | 0 | 0 | 0 | 0 | 0 | 0 | 0 |
| 7 | 0 | 0 | 0 | 0 | 0 | 0 | 0 | 0 | 1 |
| 8 | 0 | 0 | 1 | 0 | 0 | 0 | 4 | 2 | 2 |
| 9 | 0 | 0 | 3 | 0 | 0 | 0 | 5 | 3 | 2 |
| 10 | 0 | 0 | 10 | 0 | 0 | 0 | 22 | 7 | 5 |
| 11 | 0 | 1 | 25 | 0 | 2 | 2 | 29 | 25 | 17 |
| 12 | 0 | 6 | 30 | 0 | 7 | 3 | 35 | 38 | 31 |
| 13 | 0 | 15 | 32 | 0 | 12 | 10 | 40 | 48 | 47 |
| 14 | 0 | 21 | 38 | 0 | 18 | 16 | 42 | 64 | 62 |
| 15 | 2 | 26 | 42 | 0 | 20 | 22 | 54 | 80 | 80 |
| 16 | 4 | 30 | 50 | 0 | 22 | 26 | 65 | 90 | 90 |
| 17 | 7 | 34 | 57 | 18 | 23 | 21 | out | out | out |
| 18 | 14 | 43 | out | 53 | 26 | 39 | out | out | out |
| | | | | | | | | | |
| AV* | 2 | 26 | 43 | 0 | 20 | 21 | 54 | 78 | 77 |

| | | | | | | | | | |
|---|---|---|---|---|---|---|---|---|---|
| out= out of scale *= average value of turns 14, 15 and 16 | | | | | | | | | |

## Claims

1. Method for inhibiting the hydration of clays and shales during drilling operations, which includes the use of a water based drilling fluid that contains as clay and shale inhibitor from 0.2 to 5 % by weight of the reaction products of an epoxy resin with at least one primary or secondary aliphatic or cycloaliphatic amine.

2. Method for inhibiting the hydration of clays and shales according to claim 1., in which the clay and shale inhibitor is the reaction product of an aromatic, aliphatic or cycloaliphatic epoxy resin having on the average more than one epoxy group per molecule and a molecular weight from 100 to 2,000 with at least one amine selected from alkanolamines or diamines of formula (I) R'''R"N-R'-XH, where: X is O or NR⁰ and R⁰ is hydrogen or a linear or branched alkyl group having from 1 to 6 carbon atoms; R' is a linear or branched, aliphatic or cycloaliphatic alkylene group having from 2 to 10 carbon atoms; R" and R''' can be equal or different from one another and are hydrogen or a linear or branched alkyl group having from 1 to 6 carbon atoms, optionally substituted with a hydroxyl group; or selected from polyalkylene polyamines of formula (II) H-(NH-R)ₙ-YH, wherein Y is O or NH, R is a linear or branched alkylene having 2 or 3 carbon atoms and n is a number from 1 to 6.

3. Method for inhibiting the hydration of clays and shales according to claim 2., wherein the epoxy resin have on the average about two epoxy groups per molecule and a molecular weight from 200 to 1,000 and is prepared by the reaction of epichlorohydrin with Bisphenol A.

4. Method for inhibiting the hydration of clays and shales according to claim 2., wherein the epoxy resin have on the average about two epoxy groups per molecule and a molecular weight from 200 to 1,000 and is prepared by the reaction of epichlorohydrin with polypropyleneglycol having molecular weight from 200 to 800.

5. Method for inhibiting the hydration of clays and shales according to claim 3. or 4., in which the clay and shale inhibitor is the reaction product of the epoxy resin with triethylenetetramine, tetraethylenepentamine, Berolamine 20, or mixture thereof.

6. Water base drilling fluid comprising from 0.2 to 5% by weight of a clay and shale inhibitor which is the reaction product of an epoxy resin with at least one primary or secondary aliphatic or cycloaliphatic amine.

7. Water base drilling fluid according to claim 6., in which the clay and shale inhibitor is the reaction product of an aromatic, aliphatic or cycloaliphatic epoxy resin having on the average more than one epoxy group per molecule and a molecular weight from 100 to 2,000 with at least one amine selected from alkanolamines or diamines of formula (I) R'''R"N-R'-XH, where: X is O or NR⁰ and R⁰ is hydrogen or a linear or branched alkyl group having from 1 to 6 carbon atoms; R' is a linear or branched, aliphatic or cycloaliphatic alkylene group having from 2 to 10 carbon atoms; R" and R''' can be equal or different from one another and are hydrogen or a linear or branched alkyl group having from 1 to 6 carbon atoms, optionally substituted with a hydroxyl group; or selected from polyalkylene polyamines of formula (II) H-(NH-R)ₙ-YH, wherein Y is O or NH, R is a linear or branched alkylene having 2 or 3 carbon atoms and n is a number from 1 to 6.

8. Water base drilling fluid according to claim 7, wherein the epoxy resin have on the average about two epoxy groups per molecule and a molecular weight from 200 to 1,000 and is prepared by the reaction of epichlorohydrin with Bisphenol A.

9. Water base drilling fluid according to claim 7., wherein the epoxy resin have on the average about two epoxy groups per molecule and a molecular weight from 200 to 1,000 and is prepared by the reaction of epichlorohydrin with polypropyleneglycol having molecular weight from 200 to 800.

10. Water base drilling fluid according to claim 8. or 9., in which the clay and shale inhibitor is the reaction product of the epoxy resin with triethylenetetramine, tetraethylenepentamine, or Berolamine 20.

11. Method for the preparation of an aqueous solution of clay and shale inhibitor which comprises the following steps: a) at least one primary or secondary aliphatic or cycloaliphatic amine is heated and an epoxy resin is added under stirring without any solvent at a temperature comprised between 50 and 180° C, the molar ratio between the epoxy resin and the amine being comprised between 1:2 and 1:1; b) when the reaction is completed, water and a pH regulating agent are added to adjust the pH value between 6 and 8 and the concentration of the obtained product between 30 and 70% by weight.

12. Method for the preparation of an aqueous solution of clay and shale inhibitor according to claim 11., wherein the epoxy resin has on the average more than one epoxy group per molecule and a molecular weight from 100 to 2,000 and the amine is an alkanolamine or a diamine of formula (I) R'''R"N-R'-XH, where: X is O or NR⁰; R⁰ is hydrogen or a linear or branched alkyl group having from 1 to 6 carbon atoms; R' is a linear or branched, aliphatic or cicloaliphatic alkylene group having from 2 to 10 carbon atoms; R" and R''' can be equal or different from one another and are hydrogen or a linear or branched alkyl group having from 1 to 6 carbon atoms, optionally substituted with a hydroxyl group; or the amine is polyalkylene polyamine of formula (II) H-(NH-R)ₙ-YH, wherein Y is O or NH, R is a linear or branched alkylene having from 2 to 3 carbon atoms and n is a number from 1 to 6.
